# EUROPÄISCHE PATENTANMELDUNG

(11) **EP 1 457 874 A2**
(43) Veröffentlichungstag der Anmeldung: **15.09.2004**
(21) Anmeldenummer: 03104303.7
(22) Anmeldetag: 21.11.2003
(51) Int. Cl.: G06F 3/16, G06F 3/033

(54) **Vorrichtung zum Steuern eines elektronischen Geräts**

(30) Priorität: 28.02.2003 DE 10308783
(71) Anmelder: ROBERT BOSCH GMBH, 70442 Stuttgart (DE)
(72) Erfinder: Lochmahr, Gunnar, 71229 Leonberg (DE)

(57) **Zusammenfassung**

Es wird eine Vorrichtung zum Steuern eines elektronischen Geräts vorgeschlagen, das einen Sprachenspeicher (21) enthält, in dem wenigstens zwei Sprachdatensätze (23, 24, 25) zur Bedienung des Geräts hinterlegt sind. Eine Auswahl (18) adressiert aufgrund einer Eingabe einen Sprachdatensatz (23, 24, 25). Vorgesehen ist eine vorgegebene Eingabe, die ein Vorrangauswahlsignal (19) bereitstellt, das einen vorgegebenen Sprachdatensatz (25) adressiert. Die Vorrichtung vereinfacht die Bedienung von Geräten, die unterschiedliche Sprachen zu ihrer Bedienung bereithalten.

## Beschreibung

### Stand der Technik

Die Erfindung geht aus von einer Vorrichtung zum Steuern eines elektronischen Geräts nach der Gattung des unabhängigen Anspruchs.

Aus einem Prospekt der Robert Bosch GmbH, Bestellnummer IA4/VPT WAW 4566 D-588-30g, 1988 ist ein elektronisches Kraftfahrzeugtestgerät mit der Bezeichnung Pocket-System-Tester KTS 300 bekannt geworden, das eine Onboard-Diagnose von Kraftfahrzeugen ermöglicht. Zur Navigation durch die teilweise umfangreichen Prüfprozeduren ist eine Tastatur vorgesehen, die eine Taste mit der Bezeichnung "N" enthält, bei deren Betätigung der Tester an den Anfang des jeweiligen Prüfschritts springt. Das Testgerät enthält ein LC-Display sowohl zur Darstellung von Anweisungen an eine Bedienperson als auch zur Wiedergabe von Messergebnissen.

Ein weiterer Kraftfahrzeug-Steuergeräte-Diagnose-Tester der Robert Bosch GmbH wird unter der Bezeichnung KTS 650 angeboten. Informationen über das Gerät sind verfügbar unter der Internet-Adresse http://www.bosch-presse.de. Der KTS 650 enthält ein Touchscreen-TFT-Display, welches eine Tastatur weitgehend ersetzt. Der KTS 650 kann über den Touchscreen auf unterschiedliche Sprachen eingestellt werden.

Allgemein bekannter Stand der Technik sind heute Mobilfunktelefone, die eine Sprachauswahl aufweisen, die über eine Tastatur gesteuert wird.

Derartige elektronischen Geräte mit einer Sprachauswahl bergen die Gefahr, dass entweder versehentlich oder aus Neugier eine Sprache ausgewählt wird, welche die Bedienperson nicht beherrscht. Die Rückkehr in eine bekannte Sprache kann sich gegebenenfalls schwierig erweisen, weil die auf einem Display und/oder mit einer Sprachausgabe wiedergegebenen Informationen, die für die Rückkehr zu einer bekannten Sprache erforderlich sind, nicht verstanden werden.

Der Erfindung liegt die Aufgabe zu Grunde, eine Vorrichtung zum Steuern eines elektronischen Geräts anzugeben, welche die Bedienung hinsichtlich der Sprachauswahl vereinfacht.

Die Aufgabe wird durch im unabhängigen Anspruch angegebenen Merkmale gelöst.

### Vorteile der Erfindung

Die erfindungsgemäße Vorrichtung sieht hiernach eine über eine Eingabevorrichtung einzugebende vorgegebene Eingabe vor, die ein Vorrangauswahlsignal bereitstellt. Bei vorliegendem Vorrangauswahlsignal adressiert eine Auswahl eine im Speicher hinterlegte vorgegebene Sprache.

Eine Bedienperson des Geräts, die das Gerät absichtlich oder versehentlich auf die Bedienung in einer ihr unbekannten Sprache eingestellt hat, kann mit der erfindungsgemäßen Vorrichtung wieder zu der ihr bekannten vorgegebenen Sprache zurückkehren.

Vorteilhafte Ausgestaltungen und Weiterbildungen der erfindungsgemäßen Vorrichtung ergeben sich aus abhängigen Ansprüchen.

Eine Ausgestaltung sieht vor, dass die Eingabevorrichtung eine Tastatur ist und dass die vorgegebene Eingabe eine gekennzeichnete Taste ist.

Eine andere Ausgestaltung sieht vor, dass die Eingabevorrichtung ein Touchscreen ist und dass die vorgegebene Eingabe ein gekennzeichnetes Feld ist.

Eine Ausgestaltung sieht vor, dass ein Zeitgeber vorgesehen ist, der eine minimale Betätigungsdauer der Taste bzw. des Feldes vorgibt. Mir dieser Maßnahme kann die Taste bzw. das Feld auch für andere Eingaben als die vorgegebene Eingabe verwendet werden.

Eine Ausgestaltung sieht vor, dass die vorgegebene Eingabe darin besteht, mehr als eine Taste bzw. ein Feld gleichzeitig zu betätigen.

Eine Erleichterung bei der Bedienung ergibt sich, wenn die wenigstens Taste bzw. das Feld farblich hervorgehoben ist.

Eine andere Ausgestaltung sieht bei Geräten mit Spracheingabe und/oder Sprachausgabe vor, dass die vorgegebene Eingabe ein vorgegebenes Wort ist.

Die erfindungsgemäße Vorrichtung eignet sich insbesondere bei Geräten wie einem Testgerät, insbesondere einem Kraftfahrzeug- bzw. Motor-Testgerät, einem Navigationsgerät, insbesondere einem in einem Kraftfahrzeug enthaltenem Navigationsgerät, oder bei einem Mobilfunktelefon.

Ein Vorteil der erfindungsgemäßen Vorrichtung liegt darin, dass vorhandene Geräte durch Anpassung der Software umgerüstet werden können. Sofern als Eingabevorrichtung eine Tastatur oder ein Touchscreen vorhanden ist, kann die Kenntlichmachung der wenigstens einen Taste bzw. des wenigstens einen Feldes beispielsweise mit einer Klebefolie erfolgen.

Vorteilhafte Ausgestaltungen und Weiterbildungen der erfindungsgemäßen Vorrichtung ergeben sich aus weiteren abhängigen Ansprüchen und aus der folgenden Beschreibung.

### Zeichnung

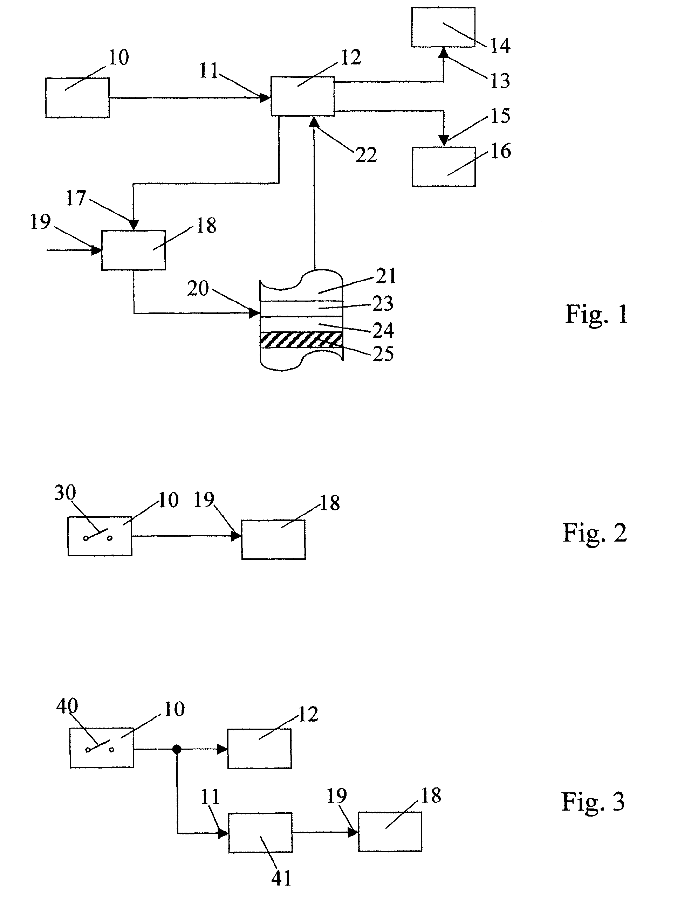

Figur 1 zeigt ein Blockschaltbild einer erfindungsgemäßen Vorrichtung zum Steuern eines Geräts und die Figuren 2 bis 5 zeigen Ausführungsbeispiele von Ausgestaltungen.

Figur 1 zeigt eine Eingabevorrichtung 10, die ein Eingabesignal 11 an eine Steuerung 12 abgibt. Die Steuerung 12 gibt ein erstes Ausgangssignal 13 an ein Display 14 und ein zweites Ausgangssignal 15 an eine akustische Ausgabe 16 ab. Weiterhin gibt die Steuerung 12 ein Auswahlsignal 17 an eine Auswahl 18 ab, der weiterhin ein Vorrangauswahlsignal 19 zugeführt ist, und die ein Adresssignal 20 an einen Sprachenspeicher 21 abgibt. Der Sprachenspeicher 21 stellt mit einem Sprachsignal 22 der Steuerung 12 einen von wenigstens zwei hinterlegten Sprachdatensätzen 23, 24, 25 zur Verfügung. Der durch Schraffur hervorgehobene Sprachdatensatz 25 ist ein vorgegebener Sprachdatensatz 25.

Die in Figur 1 gezeigte Anordnung arbeitet folgendermaßen:

Die Anordnung ist in einem Gerät enthalten, zu dessen Bedienung eine Sprache vorgesehen ist. Die Sprache kann beispielsweise auf dem Display 14 dargestellt werden. Alternativ oder zusätzlich kann die Sprache über die akustische Ausgabe 16 wiedergegeben werden. In einer Ausgestaltung kann alternativ oder zusätzlich eine Spracheingabe vorgesehen sein.

Die Auswahl der Sprache erfolgt über die Eingabevorrichtung 10, die das Eingabesignal 11 an die Steuerung 12 des Geräts abgibt. Alternativ oder zusätzlich kann das Eingabesignal 11 unmittelbar der Auswahl 18 oder einem anderen Funktionsblock zugeführt werden. Entsprechende Ausgestaltungen werden später näher erläutert. Die Steuerung 12 gibt das Auswahlsignal 17 an die Auswahl 18 ab, die daraufhin das Adresssignal 20 ausgibt, das einen bestimmten Sprachdatensatz 23, 24, 25 auswählt. Im allgemeinen ist der von einer Bedienperson des Geräts ausgewählte Sprachdatensatz 23, 24, 25 der vorgegebene Sprachdatensatz 25. Der vorgegebene Sprachdatensatz 25 ist vorzugsweise bereits vom Hersteller des Geräts für das entsprechende Auslieferungsland eingestellt oder er kann bei der erstmaligen Inbetriebnahme des Geräts vorgegeben werden.

Die Auswahlmöglichkeit der Sprache birgt die Gefahr, dass entweder versehentlich oder aus Neugier ein Sprachdatensatz 23, 24 ausgewählt wird, der nicht dem vorgegebenen Sprachdatensatz 25 entspricht, so dass das Gerät auf eine Sprache eingestellt ist, welche die Bedienperson möglicherweise nicht beherrscht. Die Rückkehr in eine bekannte Sprache kann sich gegebenenfalls schwierig erweisen, weil die auf dem Display 14 und/oder mit der akustischen Ausgabe 16 wiedergegebenen Informationen, die für die Rückkehr zu einer bekannten Sprache erforderlich sind, nicht verstanden werden.

Vorgesehen ist deshalb das Vorrangauswahlsignal 19, welches die Auswahl 18 zwingt, den vorgegebenen Sprachdatensatz 25 zu adressieren, so dass die Bedienung des Geräts wieder auf die bekannte Sprache umgestellt wird. Das Vorrangauswahlsignal 19 wird erfindungsgemäß durch eine vorgegebene Eingabe bereitgestellt.

Die in den Figuren 2 bis 5 gezeigten Ausgestaltungen betreffen unterschiedliche Möglichkeiten zur Realisierung der vorgegebenen Eingabe, die das Vorrangauswahlsignal 19 bereitstellt.

Figur 2 zeigt die Eingabevorrichtung 10, die eine beispielsweise als Tastatur ausgebildet ist. Alternativ oder zusätzlich kann ein Touchscreen vorgesehen sein, auf dem Felder vorhanden sind, die den Tasten einer Tastatur entsprechen. Die Tastatur und/oder der Touchscreen enthält eine gekennzeichnete Taste 30 bzw. ein gekennzeichnetes Feld, deren bzw. dessen Betätigung der vorgegebenen Eingabe entspricht, die zum Bereitstellen des Vorrangauswahlsignals 19 führt, welches die Auswahl 18 zur Adressierung des vorgegebenen Sprachdatensatzes 25 veranlasst. Die Kennzeichnung der Taste 30 bzw. des Feldes kann beispielsweise graphisch oder insbesondere farblich sein. Alternativ oder zusätzlich kann die Taste 30 bzw. das Feld vergrößert gegenüber den anderen Tasten bzw. Feldern sein.

Figur 3 zeigt eine der Figur 2 entsprechenden Ausgestaltung, bei der die gekennzeichnete Taste 40 bzw. das Feld der Eingabevorrichtung 10 das Eingabesignal 11 erzeugt, das einem Zeitgeber 41 zugeführt ist. Der Zeitgeber 41 ist auf eine vorgegebene Zeit von beispielsweise 2 Sekunden eingestellt. Die vorgegebene Eingabe entspricht einer Betätigung der Taste 40 bzw. des Felds, die länger ist als die vom Zeitgeber 41 festgelegte Zeit. Erst nach Ablauf der festgelegten Zeit, stellt der Zeitgeber 41 das Vorrangsignal 19 bereit, das die Auswahl 18 zur Adressierung des vorgegebenen Sprachdatensatzes 25 veranlasst. Der Vorteil der Ausgestaltung mit dem Zeitgeber 41 liegt darin, dass die gekennzeichnete Taste (40) bzw. das Feld für andere Eingaben verwendet werden kann, sofern die Betätigung kürzer erfolgt als die vom Zeitgeber 41 vorgegebene Zeit.

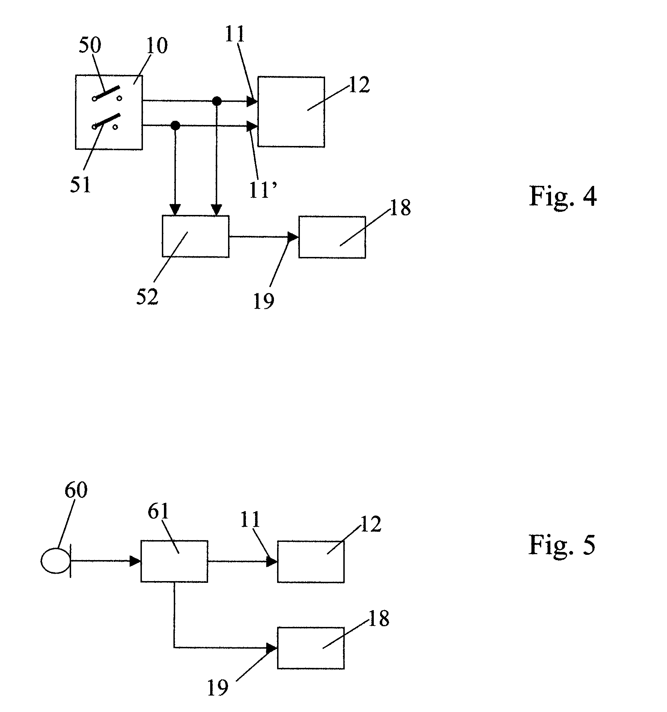

Figur 4 zeigt eine Ausgestaltung, bei der mehr als eine gekennzeichnete Taste 50, 51 bzw. Felder, vorzugsweise zwei Tasten bzw. Felder, der Eingabevorrichtung 10 zu betätigen sind. Die vorgegebene Eingabe entspricht der gleichzeitigen Betätigung der Tasten 50, 51 bzw. der Felder. Die Betätigungen der beiden Tasten 50, 51 bzw. der beiden Felder stellen zwei Eingangssignale 11, 11' bereit, die einer UND-Verknüpfung 52 zugeführt werden. Stellt die UND-Verknüpfung 52 das gleichzeitige Betätigen der Tasten 50, 51 bzw. der Felder fest, dann stellt sie das Vorrangauswahlsignal 19 bereit.

Figur 5 zeigt eine Ausgestaltung mit einer Spracheingabe, die ein Mikrofon 60 enthält. Die vorgegebene Eingabe, die zur Bereitstellung des Vorrangauswahlsignals 19 führt, ist ein vorgegebenes Wort, das in einer Spracherkennung 61 hinterlegt ist.

Die erfindungsgemäße Vorrichtung eignet sich insbesondere zum Einsatz bei kleineren tragbaren Geräten wie Testgeräten, insbesondere Kraftfahrzeug- bzw. Motor-Testgeräten, wie einem Navigationsgerät, insbesondere einem in einem Kraftfahrzeug enthaltenem Navigationsgerät, und/oder beispielsweise wie bei einem Mobilfunktelefon. Die erfindungsgemäße Vorrichtung vereinfacht die Bedienung derartiger Geräte, die eine Sprachauswahl enthalten, dadurch, dass eine Einstellung auf den vorgegebenen Sprachdatensatz 25 leicht möglich ist.

Bis auf die Eingabevorrichtung 10, das Display 14 und/oder die akustische Ausgabe 16 können sämtliche Funktionsblöcke als Software in einem Rechner realisiert werden. Das in Figur 1 gezeigte Auswahlsignal 17 und das getrennt gezeichnete Vorrangauswahlsignal 19 sind beispielsweise Signale, welche die als Tabelle hinterlegte Auswahl 18 ansteuern, aus der das Adresssignal 20 ausgelesen wird. Das Eingangssignal 11 wird anstelle der in den Figuren gezeigten Heranführung an den Zeitgeber 41 oder die UND-Verknüpfung 52 zweckmäßigerweise generell softwaremäßig decodiert und erst dann das Vorrangauswahlsignal 19 daraus entweder unmittelbar und/oder unter Einfügen weiterer Auswerteoperationen gewonnen.

## Patentansprüche

1. Vorrichtung zum Steuern eines elektronischen Geräts, das eine Eingabevorrichtung (10) aufweist, das weiterhin einen Sprachenspeicher (21) enthält, in dem wenigstens zwei Sprachdatensätze (23, 24, 25) hinterlegt sind, die zur Bedienung des elektronischen Geräts vorgesehen sind, das weiterhin eine Auswahl (18) enthält, die mit einem Adresssignal (20) einen Sprachdatensatz (23, 24, 25) adressiert, **dadurch gekennzeichnet, dass** eine vorgegebene Eingabe (30; 40; 50, 51) vorgesehen ist, die ein Vorrangauswahlsignal (19) bereitstellt, und dass die Auswahl (18) bei Vorliegen des Vorrangauswahlsignals (19) einen vorgegebenen Sprachdatensatz (25) im Sprachenspeicher (21) adressiert.

2. Vorrichtung nach Anspruch 1, **dadurch gekennzeichnet, dass** die Eingabevorrichtung (10) eine Tastatur ist und dass die vorgegebene Eingabe eine gekennzeichnete Taste (30) ist.

3. Vorrichtung nach Anspruch 1, **dadurch gekennzeichnet, dass** die Eingabevorrichtung (10) ein Touchscreen ist und dass die vorgegebene Eingabe ein gekennzeichnetes Feld ist.

4. Vorrichtung nach Anspruch 2 oder 3, **dadurch gekennzeichnet, dass** ein Zeitgeber (41) vorgesehen ist zur Vorgabe einer minimalen Betätigungsdauer der Taste (30) /des Feldes.

5. Vorrichtung nach Anspruch 2 oder 3, **dadurch gekennzeichnet, dass** die vorgegebene Eingabe mehrere gekennzeichnete Tasten (50, 51) /Felder sind, die gleichzeitig zu betätigen sind.

6. Vorrichtung nach einem der Ansprüche 2 bis 5, **dadurch gekennzeichnet, dass** wenigstens eine Taste (30; 50,51) /ein Feld farblich hervorgehoben ist.

7. Vorrichtung nach Anspruch 1, **dadurch gekennzeichnet, dass** die Eingabevorrichtung (10) eine Spracheingabe ist und dass die vorgegebene Eingabe ein vorgegebenes Wort ist.

8. Vorrichtung nach einem der vorhergehenden Ansprüche, **dadurch gekennzeichnet, dass** das elektronische Gerät ein Testgerät ist.

9. Vorrichtung nach einem der vorhergehenden Ansprüche, **dadurch gekennzeichnet, dass** das elektronische Gerät ein Navigationsgerät ist.

10. Vorrichtung nach einem der vorhergehenden Ansprüche, **dadurch gekennzeichnet, dass** das elektronische Gerät ein Mobilfunktelefon ist.
